(19) **Europäisches Patentamt European Patent Office Office européen des brevets**

(11) **EP 4 350 284 A1**

(12) **EUROPEAN PATENT APPLICATION**
published in accordance with Art. 153(4) EPC

(43) Date of publication:
**10.04.2024 Bulletin 2024/15**

(21) Application number: **22815902.6**

(22) Date of filing: **23.05.2022**

(51) International Patent Classification (IPC):
***G01C 3/06*** (2006.01)

(52) Cooperative Patent Classification (CPC):
**G01C 3/06; G01B 11/02; G01B 11/026**

(86) International application number:
**PCT/JP2022/021150**

(87) International publication number:
**WO 2022/255152 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.06.2021 JP 2021093774**

(71) Applicants:
• **Sony Group Corporation**
**Tokyo 108-0075 (JP)**
• **Sony Semiconductor Solutions Corporation**
**Atsugi-shi, Kanagawa 243-0014 (JP)**

(72) Inventors:
• **TAKATSUKA, Susumu**
**Tokyo 108-0075 (JP)**
• **SHIBAYAMA, Noribumi**
**Atsugi-shi, Kanagawa 243-0014 (JP)**
• **TETSUKAWA, Hiroki**
**Tokyo 108-0075 (JP)**
• **SATO, Hidehito**
**Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **MEASUREMENT DEVICE, MEASUREMENT METHOD, PROGRAM**

(57) A measuring device includes: an imaging control unit configured to cause an imaging unit to capture an image of a predetermined imaging range in water; and a measurement unit configured to measure information regarding a position of a target object in an imaging direction on a basis of the image captured by the imaging unit.

*FIG. 1*

**EP 4 350 284 A1**

**Description**

TECHNICAL FIELD

The present technology relates to a measuring device, a measurement method, a program, and more particularly, to a technology of measuring a target object in water.

BACKGROUND ART

There has been proposed a measuring device that irradiates phytoplankton with light of a predetermined wavelength to excite it and measures the intensity of fluorescence emitted from the excited phytoplankton to measure the abundance of the phytoplankton (see, for example, Patent Document 1).

CITATION LIST

PATENT DOCUMENT

Patent Document 1: Japanese Patent Application Laid-open No. 2019-165687

SUMMARY OF THE INVENTION

PROBLEMS TO BE SOLVED BY THE INVENTION

The measuring device described above can only measure phytoplankton excited by excitation light. Furthermore, the measuring device can measure the abundance of the phytoplankton, but cannot measure information regarding its position.

Therefore, a purpose of the present technology is to efficiently measure information regarding the position of a target object.

SOLUTIONS TO PROBLEMS

A measuring device according to the present technology includes an imaging control unit configured to cause an imaging unit to capture an image of a predetermined imaging range in water, and a measurement unit configured to measure information regarding a position of a target object in an imaging direction on the basis of the image captured by the imaging unit.

Thus, the measuring device can measure information regarding the position of the target object in the imaging direction without having a complicated configuration.

BRIEF DESCRIPTION OF DRAWINGS

Fig. 1 illustrates a configuration of a measuring device as a first embodiment.

Fig. 2 illustrates an imaging range and a measurement direction.
Fig. 3 illustrates target objects and movement of the target objects.
Fig. 4 illustrates an example of measurement setting.
Fig. 5 illustrates an example of an operation time sheet.
Fig. 6 illustrates a flowchart showing a procedure of measurement processing.
Fig. 7 illustrates rule-based distance/speed measurement processing.
Fig. 8 illustrates images for training data.
Fig. 9 illustrates a model diagram of deep learning.
Fig. 10 illustrates a configuration of a measuring device as a second embodiment according to the present technology.
Fig. 11 illustrates an example of measurement setting.
Fig. 12 illustrates a flowchart showing a procedure of measurement processing.
Fig. 13 illustrates a configuration of a measuring device of a modification example.
Fig. 14 illustrates a configuration of a measuring device of a modification example.
Fig. 15 illustrates illumination control in modification example 1.
Fig. 16 illustrates images captured by a vision sensor at illumination control in modification example 1.
Fig. 17 illustrates illumination control in modification example 2. In modification example 2, a plurality of illumination units 3 is provided.

MODE FOR CARRYING OUT THE INVENTION

Hereinafter, embodiments will be described in the following order.

<1. First Embodiment>

[1.1 Configuration of Measuring Device]
[1.2 Target Object]
[1.3 Measurement Method of First Embodiment]
[1.4 Measurement Processing]
[1.5 Distance/Speed Measurement Processing]

<2. Second Embodiment>

[2.1 Configuration of measuring device]
[2.2 Measurement Processing]
[2.3 Distance/Speed Measurement Processing in Machine Learning]

<3. Another Configuration Example of Measuring Device>
<4. Summary of Embodiments>
<5. Present Technology>

## <1. First Embodiment>

[1.1 Configuration of Measuring Device]

First, a configuration of a measuring device 1 as a first embodiment according to the present technology will be described.

The measuring device 1 is a device that treats microorganisms or fine particles present in water such as in the sea as a target object, and measures information regarding the position of the target object in an imaging direction.

Here, the microorganisms as the target object are water microorganisms such as phytoplankton, zooplankton, larvae of aquatic organisms present in water. Furthermore, the fine particles as the target object are micro plastics, dust, sand, marine snow, air bubbles, or the like. Note, however, that these are examples, and the target object may be other than these.

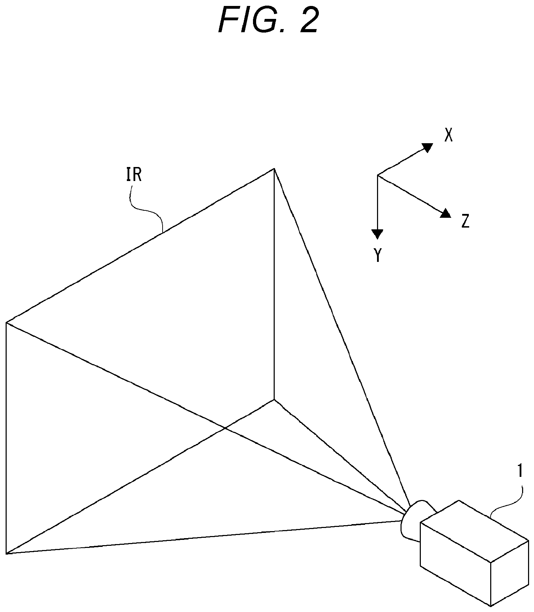

Furthermore, the information regarding the position of the target object in the imaging direction is, for example, a distance to the target object or a speed of the target object in the imaging direction (Z-axis direction in Fig. 2) of an imaging unit 14.

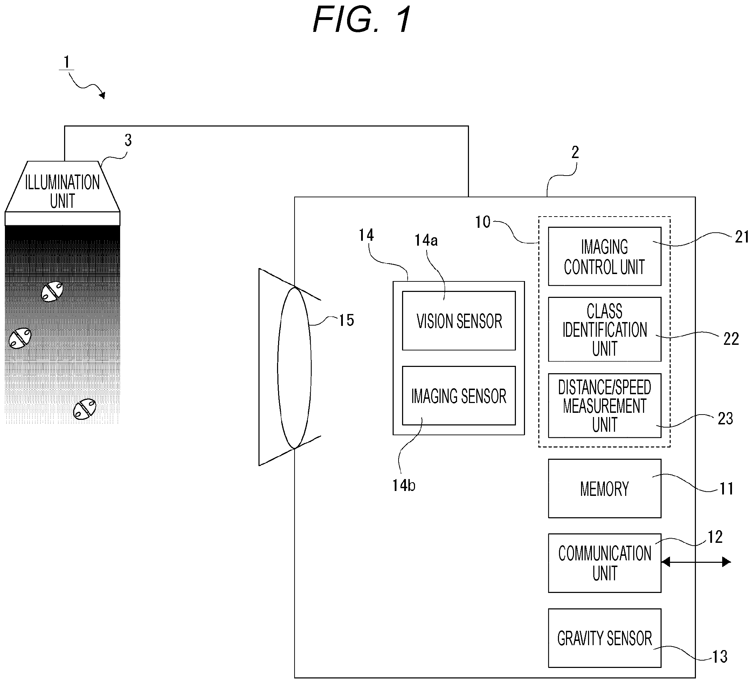

Fig. 1 illustrates a configuration of a measuring device 1 as a first embodiment. Fig. 2 illustrates an imaging range IR and a measurement direction.

As illustrated in Fig. 1, the measuring device 1 includes a main body portion 2 and an illumination unit 3. Note that the illumination unit 3 may be provided in the main body portion 2.

The main body portion 2 includes a control unit 10, a memory 11, a communication unit 12, a gravity sensor 13, an imaging unit 14, and a lens 15.

The control unit 10 includes, for example, a microcomputer including a central processing unit (CPU), a read only memory (ROM), and a random access memory (RAM). The control unit 10 performs the overall control of the measuring device 1. In the first embodiment, the control unit 10 functions as an imaging control unit 21, a class identification unit 22, and a distance/speed measurement unit 23. Note that the imaging control unit 21, the class identification unit 22 and the distance/speed measurement unit 23 will be described in more detail below.

Furthermore, the control unit 10 performs processing of reading data stored in the memory 11, processing of storing data in the memory 11, and transmission and reception of various kinds of data to and from an external device via the communication unit 12.

The memory 11 includes a non-volatile memory. The communication unit 12 performs wired or wireless data communication with an external device. The gravity sensor 13 detects gravitational acceleration (gravity direction) and outputs the detection result to the control unit 10. Note that the measuring device 1 may not include the gravity sensor 13.

The imaging unit 14 includes both or one of the vision sensor 14a and imaging sensor 14b. The vision sensor 14a is a sensor called a dynamic vision sensor (DVS) or an event-based vision sensor (EVS). The vision sensor 14a captures an image of a predetermined imaging range IR in water through the lens 15. Note that hereinafter, as illustrated in Fig. 2, the left and right direction of the imaging range IR may be referred to as the X-axis direction, the upper and lower direction of the imaging range IR may be referred to as the Y-axis direction, and the imaging direction (optical axis direction) of the imaging unit 14 may be referred to as the Z-axis direction.

The vision sensor 14a is an asynchronous image sensor that includes a plurality of pixels arranged two-dimensionally. Each pixel includes a photoelectric conversion device and a detection circuit that detects an address event in real time. Note that the address event is an event that occurs in accordance with an amount of incident light for each of addresses allocated respectively to the plurality of pixels arranged two-dimensionally. The address event is, for example, an event in which the value of a current based on a charge generated in the photoelectric conversion device or the variation thereof exceeds a certain threshold or the like.

The vision sensor 14a detects whether or not the address event occurs for each pixel. In a case where it is detected that the address event occurs, the vision sensor 14a reads a pixel signal as pixel data from the pixel in which the address event occurs. In other words, the vision sensor 14a acquires pixel data asynchronously in accordance with an amount of light incident on each of the plurality of pixels arranged two-dimensionally.

The vision sensor 14a performs an operation of reading a pixel signal on the pixel in which it is detected that the address event occurs. The vision sensor 14a may thus perform reading at an extremely high speed, compared to a synchronous image sensor that performs an operation of reading on all pixels at a predetermined frame rate, and may also read a small amount of data as one frame.

Therefore, the measuring device 1 may detect a motion of the target object more quickly using the vision sensor 14a. Furthermore, the vision sensor 14a may also reduce data amount and power consumption.

The imaging sensor 14b is, for example, a charge coupled device (CCD) or complementary metal-oxide-semiconductor (CMOS) image sensor. The imaging sensor 14b includes a plurality of pixels arranged two-dimensionally, each pixel including a photoelectric conversion device. The imaging sensor 14b captures an image of a predetermined imaging range IR through the lens 15 at certain intervals in accordance with a frame rate to generate image data. Note that the measuring device 1 may use a zone plate, a pinhole plate, or a transparent plate instead of the lens 15.

The vision sensor 14a and the imaging sensor 14b are arranged to capture an image of substantially the same imaging range IR through the lens 15. For example, a one-way mirror (not illustrated) is only required to be arranged between the vision and imaging sensors 14a and 14b and the lens 15 such that one part of light dispersed by the one-way mirror is incident on the vision sensor 14a and the other part is incident on the imaging sensor 14b.

The illumination unit 3 is driven on the basis of the control of the control unit 10, and irradiates the imaging range IR of the imaging unit 14 with light. The illumination unit 3 may switch and emit light of different wavelengths, and emits light of different wavelengths every 10 nm, for example.

[1.2 Target Object]

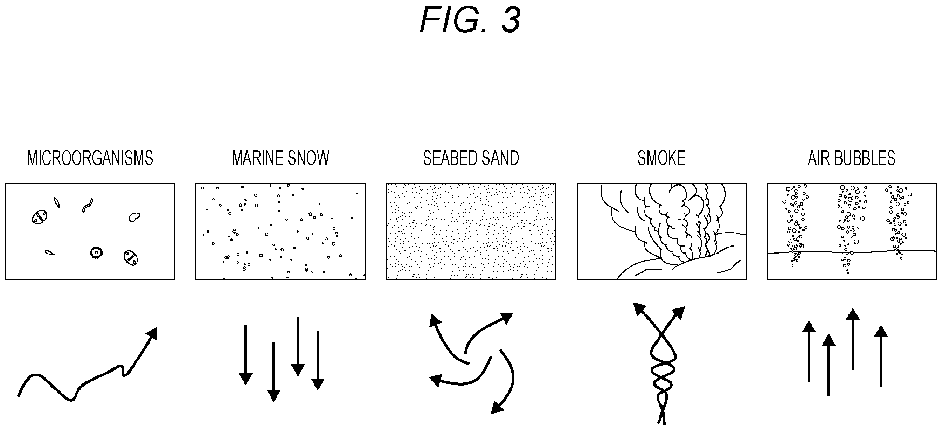

Fig. 3 illustrates target objects and movement of the target objects. Note that Fig. 3 shows images of target objects in the upper part and moving directions of the target objects by arrows in the lower part.

As illustrated in Fig. 3, the target objects include microorganisms, marine snow, seabed sand, smoke, and air bubbles.

Moreover, it is known that some microorganisms exhibit cursoriality by being irradiated with light of a specific wavelength. Here, the cursoriality is an innate behavior of an organism reacting to light (external stimulus). Therefore, the microorganisms having cursoriality that is irradiated with light of a specific wavelength will move in accordance with the cursoriality.

The marine snow is, for example, a particle such as a discharge, a dead body, or a decomposition product thereof of a plankton present in the sea, and moves to sink in the sea (in the gravity direction).

The seabed sand is, for example, particles such as sand precipitating on the sea bed, and moves in a swirling manner by the sea bed flow.

The smoke is, for example, a phenomenon in which high temperature water heated by geothermal heat is ejected from a hydrothermal vent in the sea bed. Then, the hot water blown out of the hydrothermal vent may reach several hundred degrees. Since the hot water abundantly contains heavy metals and hydrogen sulfide as dissolved components, it reacts with seawater and provides black or white smoke that moves upward while swirling.

The air bubbles are, for example, natural gas such as methane and carbon dioxide leaking (ejecting) from the sea bed, or a carbon dioxide leaking from reservoir artificially injected in a carbon dioxide reserve (CCS), and the like, and move upward from the sea bed.

As described above, some target objects, not limited to microorganisms and even fine particles, move in a specific moving direction. Therefore, the measuring device 1 as the first embodiment identifies, as target objects, microorganisms and fine particles whose moving directions are known.

[1.3 Measurement Method of First Embodiment]

Next, a measurement method (measurement processing) for the target object as the first embodiment will be described.

The ocean is the aphotic zone which sunlight does not reach at a depth of about 150m. The aphotic zone occupies most of the open ocean, and includes a lot of target objects described above. Meanwhile, it is known that the target object reflects or emits light of different wavelengths or intensities for each wavelength of the light that the object is irradiated with.

Therefore, on the assumption that the measurement is performed in the aphotic zone which sunlight does not reach, the measuring device 1 identifies the type of the target object by irradiating the target object with light of different wavelengths and capturing an image by the reflected light (or excitation light). Then, the measuring device 1 measures the distance and speed in the imaging direction for the target object whose type is identified.

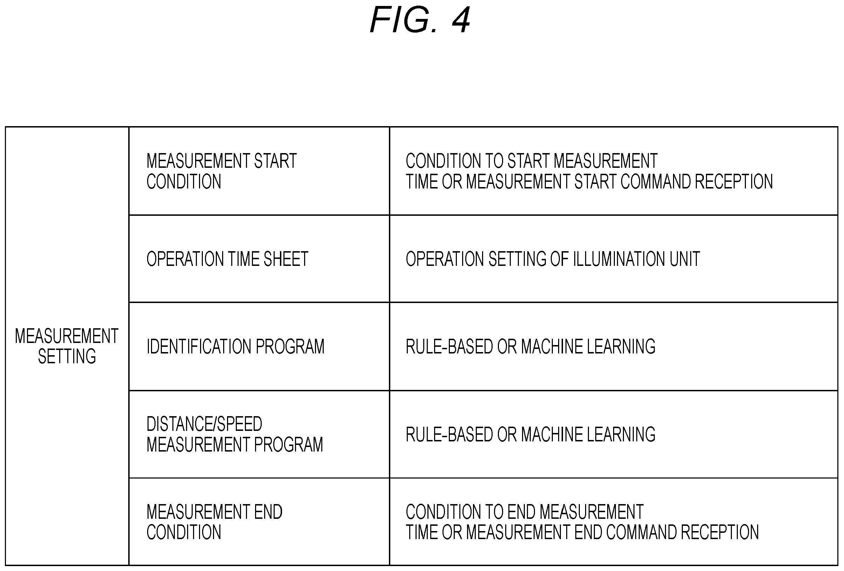

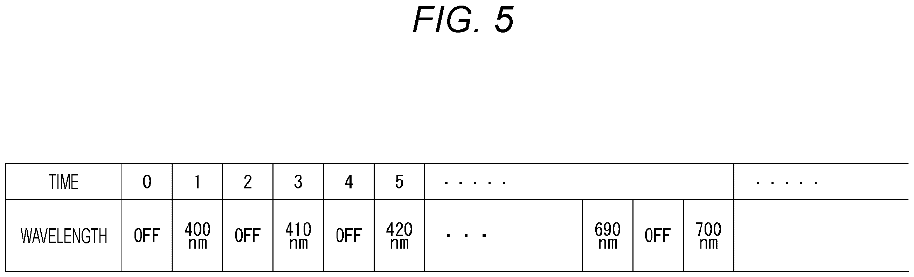

Fig. 4 illustrates an example of measurement setting. Fig. 5 illustrates an example of an operation time sheet.

The control unit 10 measures according to the measurement setting previously specified as illustrated in Fig. 4. The measurement setting specifies a measurement start condition, an operation time sheet of the illumination unit 3, an identification program (identification method), a distance/speed measurement program (distance/speed measurement method), and a measurement end condition.

The measurement start condition specifies a condition for starting the measurement, such as time to start the measurement or reception of the measurement start command that is input via the communication unit 12, and the like.

The operation time sheet specifies a time sheet for operating the illumination unit 3. For example, the operation time sheet illustrated in Fig. 5 specifies that light has different wavelengths of 400 nm, 410 nm, ..., 690 nm, and 700 nm every 10 nm in the range of 400 nm to 700 nm and is emitted having turn-off between each wavelength.

As described above, the operation time sheet specifies that the imaging range IR is irradiated with light of what wavelength at what timing from the illumination unit 3. Note that the reason a timing is provided at which the illumination unit 3 is turned off, in other words, light is not emitted, is to capture an image of light when the target object is emitting light (being excited). Furthermore, having turn-off between each wavelength also has an effect that the asynchronous vision sensor 14a may easily detect an event for each wavelength.

The identification program specifies a program (method) for identifying the type of the target object, such as identification by machine learning, identification by rule base, and the like.

The distance/speed measurement program specifies a program (method) for measuring information regarding the position of the target object in the imaging direction, such as measurement by machine learning, measurement by rule base, and the like.

The measurement end condition specifies a condition for ending the measurement, such as time to end the measurement or reception of the measurement end command that is input via the communication unit 12, and the like.

[1.4 Measurement Processing]

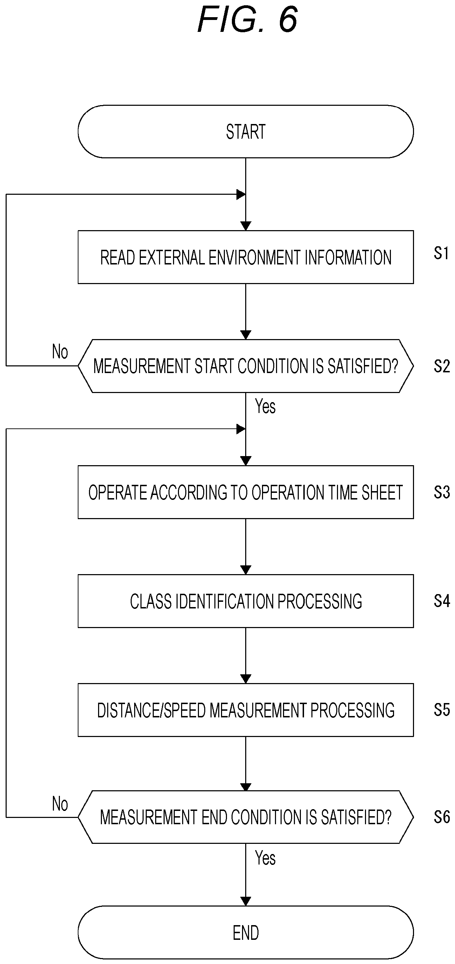

Fig. 6 illustrates a flowchart showing a procedure of measurement processing. The control unit 10 performs the measurement processing illustrated in Fig. 6 by performing software (including the identification program, distance/speed measurement program) stored in the memory 11.

In step S1, the control unit 10 reads external environment information as will be described in more detail below. Then, in step S2, the control unit 10 determines whether or not the measurement start condition specified in the measurement setting is satisfied. Then, the control unit 10 repeats steps S1 and S2 until the measurement start condition is satisfied.

Meanwhile, if the measurement start condition is satisfied (Yes in step S2), then in step S3, the imaging control unit 21 causes the illumination unit 3 to switch and emit light of different wavelengths according to the operation time sheet specified in the measurement setting. Furthermore, every time the wavelength and turn-on/off of light emitted from the illumination unit 3 are switched, the imaging control unit 21 causes the imaging unit 14 to capture an image of the imaging range IR and acquires pixel data and image data. Subsequently, in step S4, the class identification unit 22 performs the class identification processing.

In the class identification processing, the class identification unit 22 identifies (specifies) the type of the target object on the basis of the image (pixel data and image data) captured by the imaging unit 14. The class identification unit 22 derives identification information from the image captured by the imaging unit 14 and compares it with definition information stored in the memory 11 to detect the target object.

The definition information is provided for each target object and stored in the memory 11. The definition information includes the type of the target object, movement information, and image information.

The movement information is information that is detected mainly on the basis of the image captured by the vision sensor 14a and information based on movement of the target object as illustrated in the lower part of Fig. 3. In a case where the target object is a microorganism, the movement information is information such as a moving direction (positive or negative), a speed, and a trajectory with respect to the light source. In a case where the target object is a fine particle, the movement information is information such as a moving direction, a speed, and a trajectory.

The image information is information detected mainly on the basis of the image captured by the imaging sensor 14b and is external information of the target object. Note that the image information may be information detected on the basis of the image captured by the vision sensor 14a.

Furthermore, the definition information may include a gravity direction detected by the gravity sensor 13 and external environment information acquired via the communication unit 12. Note that the external environment information may include depth, position coordinate (latitude and longitude of the measurement point, plane rectangular coordinate), electrical conductivity, temperature, ph, concentration of gas (for example, methane, hydrogen, helium), concentration of metal (for example, manganese, iron), or the like.

The class identification unit 22 detects an object present in the imaging range IR on the basis of the image (pixel data) captured by the vision sensor 14a. For example, the class identification unit 22 creates one image (frame data) on the basis of pixel data that is input within a predetermined period. The class identification unit 22 then detects, as one object, a pixel group within a predetermined range in which a motion is detected in the image.

Furthermore, the class identification unit 22 tracks an object between a plurality of frames by pattern matching and the like. Then, on the basis of the tracking result of the object, the class identification unit 22 derives the moving direction, the speed, and the trajectory as the identification information.

Note that a cycle at which the class identification unit 22 generates an image from pixel data may be the same as or shorter than the cycle (frame rate) at which the imaging sensor 14b acquires image data.

Furthermore, with respect to the object from which the identification information is derived, the class identification unit 22 extracts an image portion corresponding to the object from the image data that is input from the imaging sensor 14b. Then, on the basis of the extracted image portion, the class identification unit 22 derives external characteristics as the identification information by image analysis. Note that the image analysis may be performed using known methods, and thus its description is omitted here.

The class identification unit 22 identifies which one the target object is by checking the wavelength of light emitted by the illumination unit 3 and the identification information (moving direction, trajectory, speed, external characteristics) derived for the detected object against the definition information according to the specified identification program. Here, for example, if the derived identification information of the object is within the range indicated in the definition information of the target object, then the class identification unit 22 identifies the derived object as the type indicated in the definition information.

These pieces of definition information are stored in the memory 11 by different methods for each identification program. For example, in the rule-based identification program, the definition information is preset by a user and stored in the memory 11. Furthermore, in the machine learning identification program, the definition information is generated and updated by machine learning in the learning mode, and stored in the memory 11.

Subsequently, the class identification unit 22 stores, in the memory 11, the identification result of the detected target object and the image captured by the imaging sensor 14b, and transmits them to an external device via the communication unit 12.

In step S5, the distance/speed measurement unit 23 performs distance/speed measurement processing of measuring the distance and speed of the target object in the imaging direction (information regarding the position of the target object) on the basis of the type of the target object identified by the class identification unit 22. Note that the distance/speed measurement processing in step S5 will be described in more detail below.

Subsequently, in step S6, the control unit 10 determines whether or not the measurement end condition is satisfied. Then, the control unit 10 repeats steps S1 to S6 until the measurement end condition is satisfied. If the ending condition is satisfied (Yes in step S6), then the control unit 10 ends the determination processing.

[1.5 Distance/Speed Measurement Processing]

Next, the distance/speed measurement processing will be described. As described above, in step S5, the distance/speed measurement unit 23 performs distance/speed measurement processing on the basis of the rule-based or machine learning distance/speed measurement program.

Here, the rule-based distance/speed measurement processing and the distance/speed measurement processing in machine learning will be described with specific examples.

[1.5.1 Rule-Based Distance/Speed Measurement Processing]

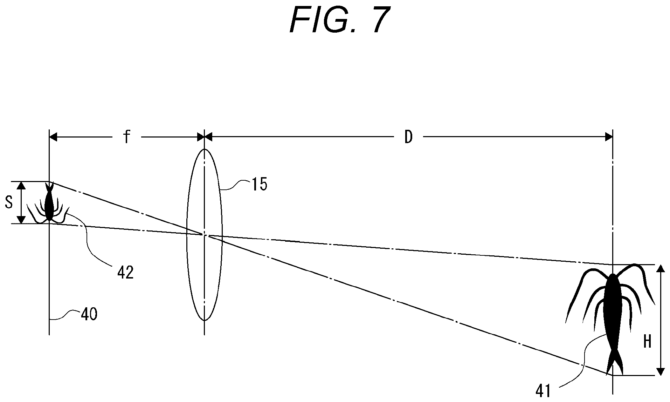

Fig. 7 illustrates the rule-based distance/speed measurement processing. In the rule-based distance/speed measurement processing, the focal distance f of the vision sensor 14a is stored in the memory 11 as known information.

Furthermore, the memory 11 also stores statistical information (average size H) for each target object. This is previously registered by the user as a database.

Then, when the target object is identified from the image based on the pixel data, the distance/speed measurement unit 23 reads the average size H of the target object and the focal distance f of the vision sensor 14a from the memory 11. Subsequently, the distance/speed measurement unit 23 calculates the length s in the longitudinal direction of the image 42 of the target object that is captured on the imaging plane 40. This calculation is on the basis of, for example, the number of pixels in which the image 42 is captured.

Furthermore, the distance/speed measurement unit 23 calculates the distance D in the imaging direction (Z direction) from the measuring device 1 to the target object 41 using Formula (1).

$$D = fH/s \quad \ldots \ (1)$$

In this manner, the distance/speed measurement unit 23 calculates (measures) the distance D from the measuring device 1 to the actual target object 41 every time the image based on the pixel data is acquired (every time the target object is detected from the image).

Furthermore, for the target object 41 tracked between consecutive images, the distance/speed measurement unit 23 calculates (measures) the speed in the imaging direction (Z-axis direction) on the basis of the interval at which the images are acquired and of the distance D in each image.

As described above, in the rule-based distance/speed measurement processing, the distance/speed measurement unit 23 measures information regarding the position of the target object on the basis of the statistical information (average size) for each target object.

[1.5.2 Distance/Speed Measurement Processing in Machine Learning]

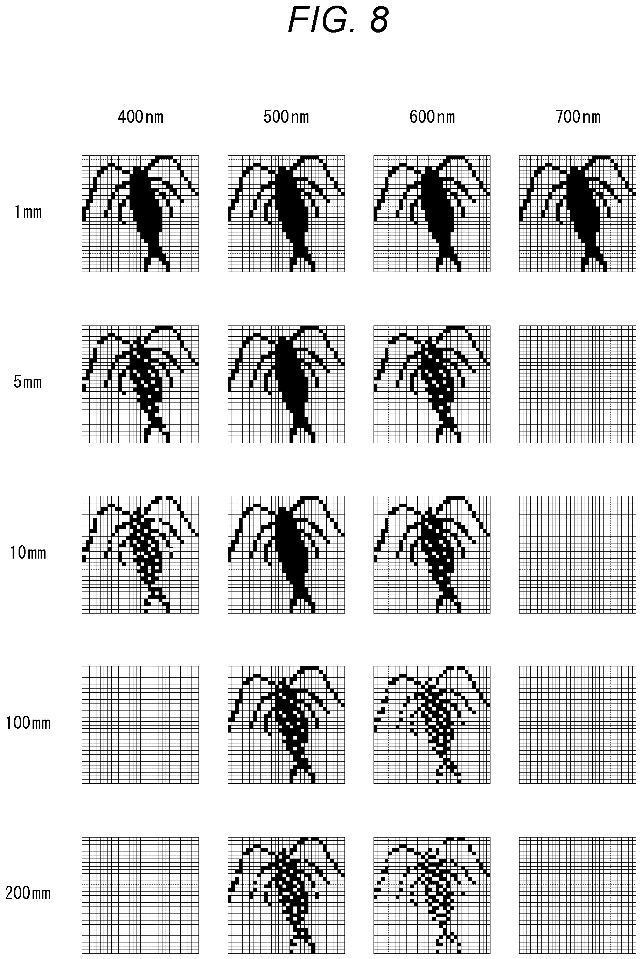

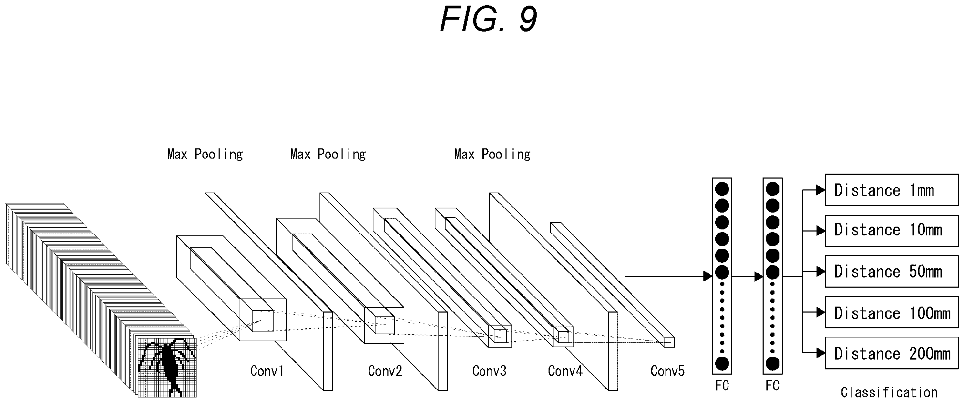

Fig. 8 illustrates images for training data. Fig. 9 illustrates a model diagram of deep learning.

The distance/speed measurement processing in machine learning performs machine learning using, for example, images that are training data as illustrated in Fig. 8 and generates a model (architecture) for the distance/speed measurement processing.

Specifically, images are previously prepared that are captured by the vision sensor 14a from a known target object. The images are provided in a total of 153 patterns including five patterns in which the distance from the measuring device 1 to the target object in the imaging direction is 1 mm, 5 mm, 10 mm, 100 mm, and 200 mm, multiplied by 31 patterns in which the wavelength of the emitted light is varied from 400 nm to 700 nm every 10 nm.

Then, for each of the prepared images, the distance/speed measurement unit 23 detects, as a target object, a pixel group within a predetermined range where a motion is detected and resizes the pixel group to 32 pixels by 32 pixels, thus generating images that are training data as illustrated in Fig. 8.

Note that Fig. 8 illustrates a part of images that are training data. Here, in the sea, the attenuation factor of light with a wavelength of about 500 nm is the lowest, and the attenuation factor of light with a wavelength smaller than about 500 nm and light with a wavelength larger than about 500 nm increase as the wavelength moves away from about 500 nm.

Furthermore, as the distance from the measuring device 1 to the target object increases, the arrival factor of light decreases.

Therefore, as illustrated in Fig. 8, in the images in which the target object is captured, as the target object is closer to the measuring device 1 or as the wavelength of the emitted light is closer to 500 nm, the target object is more clearly captured. Then, as the target object is farther from the measuring device 1 or the wavelength of the emitted light is farther form 500 nm, the target object is less clearly captured or not captured at all.

When the image as the training data is resized, the distance/speed measurement unit 23 applies machine learning to the training data including these images using a deep neural network, as illustrated in Fig. 9. This model includes, for example, five convolution layers (Conv1 to Conv5), three pooling layers (Max Pooling), and two fully connected layers (FC). Then, by machine learning, a model is generated and stored in the memory 11 that finally outputs one-dimensional classification vector having five elements from Distance 1 mm to Distance 200 mm.

Such machine learning using a deep neural network is performed for each target object, and a model is generated for each target object and stored in the memory 11.

Then, when the class identification unit 22 identifies the type of the target object (in step S4), the distance/speed measurement unit 23 reads a model of the identified type from the memory 11. Furthermore, the distance/speed measurement unit 23 resizes the target object portion in the image captured by the vision sensor 14a to 32 pixels by 32 pixels and inputs the resized image into the read model. Accordingly, the value of one-dimensional classification vector having five elements from Distance 1 mm to Distance 200 mm is output. Then, the distance/speed measurement unit 23 outputs (measures) the element having the highest value among the five elements (any one of Distance 1 mm to Distance 200 mm) as the distance of the target object in the imaging direction.

Furthermore, for the target object tracked between consecutive images, the distance/speed measurement unit 23 calculates (measures) the speed in the imaging direction (Z-axis direction) on the basis of the interval at which the images are acquired and the distance in the imaging direction in each image.

As described above, in the distance/speed measurement processing in machine learning, the distance/speed measurement unit 23 measures the information regarding the position of the target object on the basis of the learning result of the information regarding the position previously learned for each type of the target object.

<2. Second Embodiment>

[2.1 Configuration of measuring device]

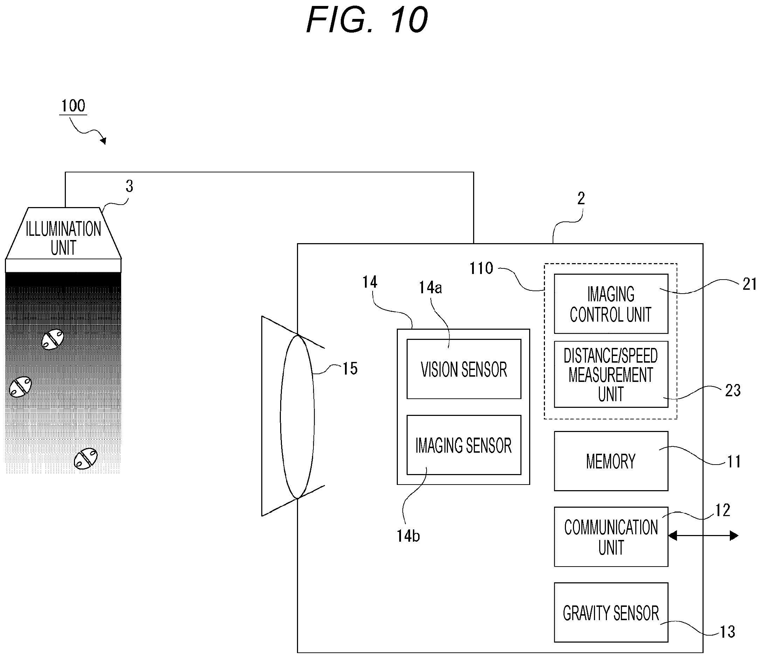

Fig. 10 illustrates a configuration of a measuring device 100 as a second embodiment according to the present technology. As illustrated in Fig. 10, the measuring device 100 is similar to the measuring device 1 as the first embodiment, except that the control unit 110 does not function as the class identification unit 22.

Then, on the basis of the image captured by the vision sensor 14a, the measuring device 100 measures the distance to the target object in the imaging direction and the speed thereof without identifying the type of the target object.

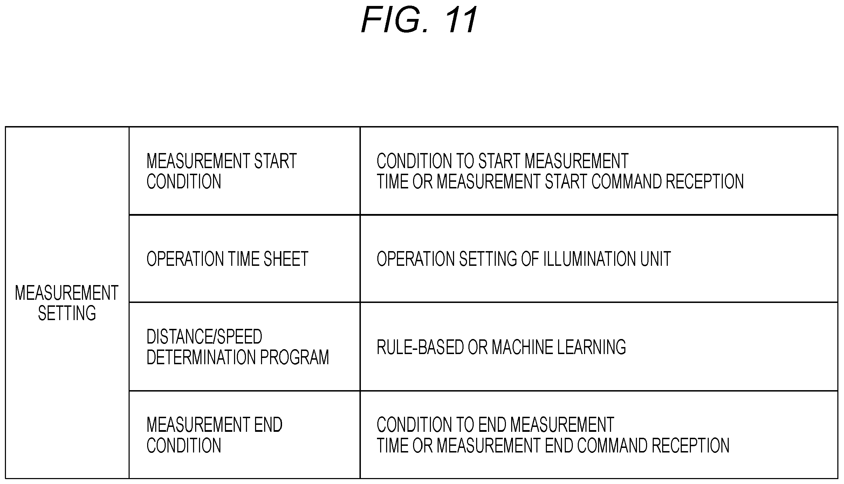

Fig. 11 illustrates an example of measurement setting. The control unit 110 measures according to the measurement setting previously specified as illustrated in Fig. 11. The measurement setting specifies a measurement start condition, an operation time sheet of the illumination unit 3, a distance/speed measurement program (measurement method), and a measurement end condition.

The measurement start condition specifies a condition for starting the measurement, such as time to start the measurement or reception of the measurement start command that is input via the communication unit 12, and the like.

The operation time sheet specifies a time sheet for operating the illumination unit 3. For example, the operation time sheet illustrated in Fig. 5 specifies that light has different wavelengths of 400 nm, 410 nm, ..., 690 nm, and 700 nm every 10 nm in the range of 400 nm to 700 nm and is emitted while repeating turn-on and turn-off.

The distance/speed measurement program specifies a program (method) for measuring information regarding the position of the target object in the imaging direction, such as measurement by machine learning, measurement by rule base, and the like.

The measurement end condition specifies a condition for ending the measurement, such as time to end the measurement or reception of the measurement end command that is input via the communication unit 12, and the like.

As described above, the measurement setting in the second embodiment is different from the measurement setting in the first embodiment in that the identification program is not provided.

[2.2 Measurement Processing]

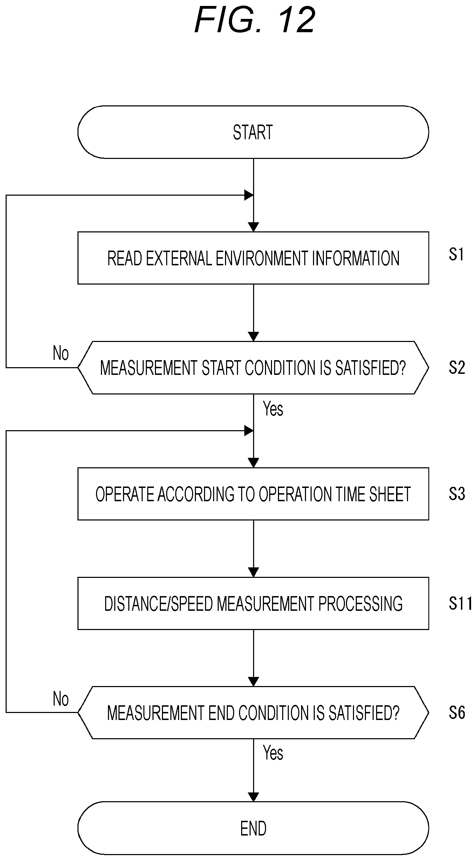

Fig. 12 illustrates a flowchart showing a procedure of measurement processing. The control unit 110 performs the measurement processing illustrated in Fig.

12 by performing software (distance/speed measurement program) stored in the memory 11.

In step S1, the control unit 110 reads external environment information. Then, in step S2, the control unit 10 determines whether or not the measurement start condition specified in the measurement setting is satisfied. Then, the control unit 110 repeats steps S1 and S2 until the measurement start condition is satisfied.

Meanwhile, if the measurement start condition is satisfied (Yes in step S2), then in step S3, the imaging control unit 21 causes the illumination unit 3 to switch and emit light of different wavelengths according to the operation time sheet specified in the measurement setting. Furthermore, every time the wavelength and turn-on/off of light emitted from the illumination unit 3 are switched, the imaging control unit 21 causes the imaging unit 14 to capture an image of the imaging range IR and acquires pixel data and image data.

Subsequently, in step S11, on the basis of the image based on the pixel data, the distance/speed measurement unit 23 detects the object present in the imaging range as the target object and performs distance/speed measurement processing of measuring the distance to the target object in the imaging direction and the speed thereof. Note that the distance/speed measurement processing in step S11 will be described in more detail below.

Subsequently, in step S6, the control unit 10 determines whether or not the ending condition for ending the determination processing is satisfied. Then, the control unit 10 repeats steps S1 to S6 until the ending condition for ending the determination processing is satisfied. If the ending condition for ending the purpose-specific measurement operation processing is satisfied (Yes in step S6), then the control unit 10 ends the determination processing.

[2.3 Distance/Speed Measurement Processing in Machine Learning]

As described above, in step S11, the distance/speed measurement unit 23 performs the distance/speed measurement processing on the basis of the rule-based or machine learning distance/speed measurement program.

Here, the distance/speed measurement processing in machine learning will be described with specific examples.

The measuring device 100 creates a deep learning model as illustrated in Fig. 9 similarly to the measuring device 1.

Here, in the first embodiment, the model is generated for each target object, while in the second embodiment, the model is not generated for each target object and only one model previously learned is generated regardless of the type of the target object.

Specifically, images are previously prepared that are captured by the vision sensor 14a. The images are provided in a total of 153 patterns multiplied by the number of types of different target objects. The 153 patterns include five patterns in which the distance from the measuring device 1 to the target object in the imaging direction is 1 mm, 5 mm, 10 mm, 100 mm, and 200 mm, multiplied by 31 patterns in which the wavelength of the emitted light is varied from 400 nm to 700 nm every 10 nm.

Then, for each of the prepared images, the distance/speed measurement unit 23 detects, as a target object, a pixel group within a predetermined range where a motion is detected and resizes the pixel group to 32 pixels by 32 pixels, thus generating images that are training data as illustrated in Fig. 8.

When the image as the training data is resized, the distance/speed measurement unit 23 applies machine learning to the training data including these images using a deep neural network, as illustrated in Fig. 9, and stores the generated model in the memory 11.

Then, the distance/speed measurement unit 23 resizes the target object portion in the image captured by the vision sensor 14a to 32 pixels by 32 pixels and inputs the resized image to the model that is read from the memory 11. Accordingly, the value of one-dimensional classification vector having five elements from Distance 1 mm to Distance 200 mm is output. Then, the distance/speed measurement unit 23 outputs (measures) the element having the highest value among the five elements (any one of Distance 1 mm to Distance 200 mm) as the distance of the target object in the imaging direction.

Furthermore, for the target object tracked between consecutive images, the distance/speed measurement unit 23 calculates (measures) the speed in the imaging direction (Z-axis direction) on the basis of the interval at which the images are acquired and the distance in the imaging direction in each image.

As described above, in the distance/speed measurement processing in machine learning, the distance/speed measurement unit 23 measures the information regarding the position of the target object on the basis of the learning result of the information regarding the position previously learned regardless of the type of the target object.

Therefore, the second embodiment uses a smaller number of models than the first embodiment and thus may reduce the data capacity. Furthermore, the second embodiment may decrease the calculation time while the distance measurement accuracy is reduced.

<3. Another Configuration Example of Measuring Device>

Note that the embodiments are not limited to the specific examples described above and may be configured as various modification examples.

In the embodiments described above, the measuring device 1 includes one illumination unit 3. However, the number of illumination units 3 is not limited to one, a plurality of illumination units 3 may be provided.

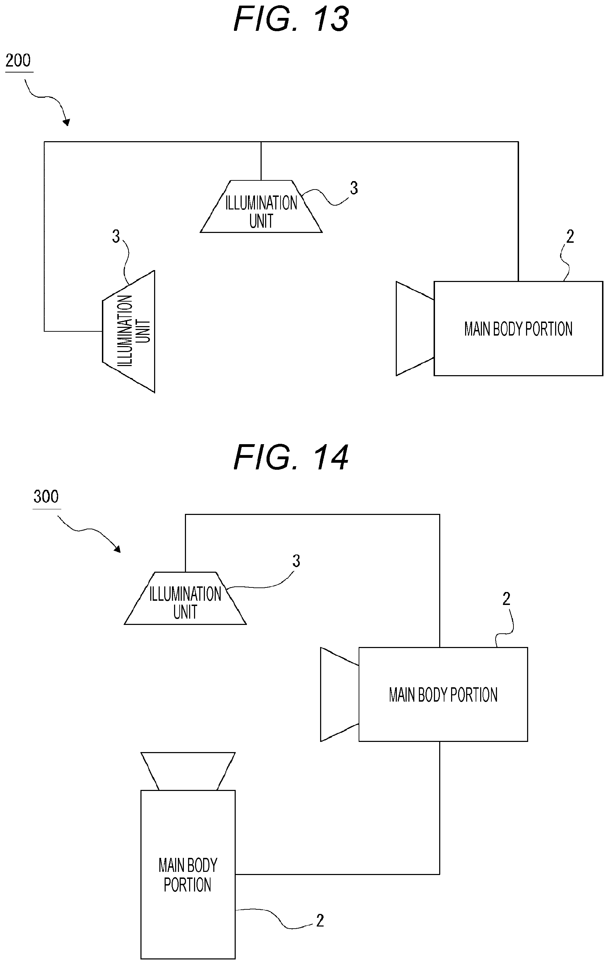

Fig. 13 illustrates a configuration of a measuring device 200 according to a modification example. As illustrated in Fig. 13, the measuring device 200 of the modification example includes one main body portion 2 and two illumination units 3. The two illumination units 3 are arranged to be able to emit light in directions perpendicular to each other and are able to emit light of different wavelengths from each other to the imaging range.

In such a measuring device 200, the two illumination units 3 may emit light of different wavelengths, and thus only one measurement may provide identification information of the target objects (microorganisms) that exhibit cursoriality for light of different wavelengths, thus providing an efficient measurement.

Fig. 14 illustrates a configuration of a measuring device 300 according to a modification example. As illustrated in Fig. 14, the measuring device 300 of the modification example includes two main body portions 2 and one illumination unit 3. The two main body portions 2 are arranged to be able to capture images in directions perpendicular to each other.

In such a measuring device 300, the two main body portions 2 (imaging units 14) may capture an image, and thus three-dimensional movement of the target object may be detected, thus providing a more efficient measurement.

Note that in a case where two main body portions 2 are provided, one of the main body portions 2 may include only the imaging unit 14.

Furthermore, in the embodiments described above, the imaging unit 14 includes the vision sensor 14a and the imaging sensor 14b. However, the imaging unit 14 may include only one of the vision sensor 14a or imaging sensor 14b as long as it may capture an image capable of measuring at least information regarding the position of the target object in the imaging direction. Furthermore, the imaging unit 14 may include a single photon avalanche diode (SPAD) sensor instead of the vision sensor 14a and imaging sensor 14b.

Furthermore, in the embodiments described above, the type of the target object is identified by deriving the identification information on the basis of the pixel data acquired by the vision sensor 14a and the image data acquired by the imaging sensor 14b. However, other methods may also be used for identification, if the type of the target object may be identified on the basis of at least one of the pixel data acquired by the vision sensor 14a and the image data acquired by the imaging sensor 14b.

Furthermore, in the described above embodiments, the machine learning is performed by deep learning. However, the method of machine learning is not limited thereto and the machine learning may be performed by other methods. Furthermore, the model generated by the machine learning may be created by an external device instead of the measuring device 1.

[3-1 Modification Example 1]

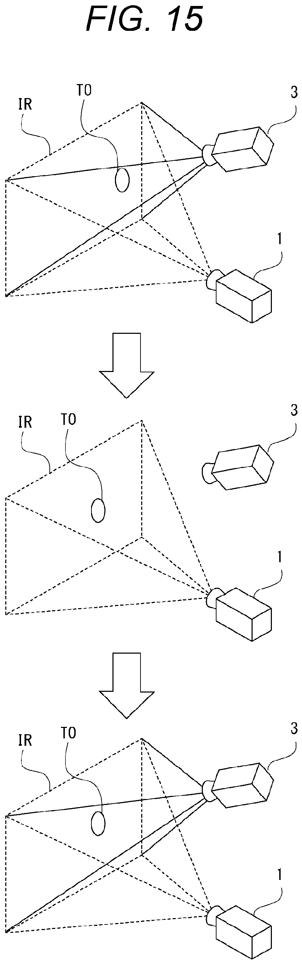

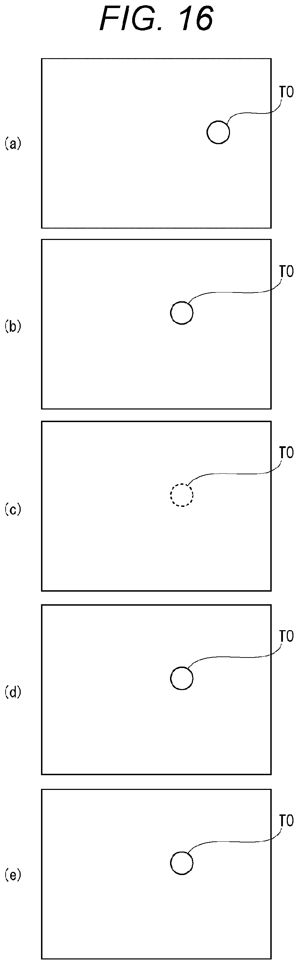

Fig. 15 illustrates illumination control in modification example 1. Fig. 16 illustrates images captured by the vision sensor 14a at illumination control in modification example 1.

Meanwhile, in the vision sensor 14a, an address event occurs in each pixel due to a luminance change and a current value change that exceeds a certain threshold. Therefore, in a case where the target object TO is moving at extremely a low speed or not moving at all in the imaging range (hereinafter, these are collectively referred to as stopping), the address event does not occur in each pixel. Therefore, in such a case, the vision sensor 14a may not capture an image of the target object TO.

Therefore, in a case where the target object TO stops, the emission of light from the illumination unit 3 is temporarily stopped. Specifically, when the target object TO moves in the imaging range while the illumination unit 3 is emitting light as illustrated in the upper part of Fig. 15, the imaging control unit 21 causes the vision sensor 14a to capture an image of the target object TO as illustrated in Fig. 16(a) and Fig. 16(b).

Subsequently, when the target object TO stops, the address event does not occur in the vision sensor 14a and thus, as illustrated in Fig. 16(c), an image of the target object TO is not captured (indicated by a broken line in the figure).

In a case where the target object TO may not be detected in the imaging range (in a case where the target object TO disappears in the imaging range), the imaging control unit 21 determines that the target object TO stops, the target object TO moves to the outside of the imaging range at a high speed, or the target object TO disappears. Then, the imaging control unit 21 temporarily stops the emission of light from the illumination unit 3 as illustrated in the middle part of Fig. 15. In a case where the target object TO is present in the imaging range, when the emission of light from the illumination unit 3 is stopped, luminance changes for the target object TO and thus the vision sensor 14a captures an image of the target object TO, as illustrated in Fig. 16(d).

Furthermore, the imaging control unit 21 restarts the emission of light from the illumination unit 3, as illustrated in the lower part of Fig. 15. When the emission of light from the illumination unit 3 is restarted, luminance changes for the target object TO and thus the vision sensor 14a captures an image of the target object TO, as illustrated in Fig. 16(e).

In this manner, in a case where the target object TO may not be detected in the imaging range, the emission of light from the illumination unit 3 is temporarily stopped. As a result, in a case where the target object TO is present in the imaging range, the target object TO appears in the image captured by the vision sensor 14a and thus the target object TO may be measured continuously.

Note that in a case where the target object TO may not be detected in the imaging range, the imaging control unit 21 may change the wavelength of light emitted from the illumination unit 3. Even changing the wavelength of light emitted from the illumination unit 3 may allow the vision sensor 14a to capture an image of the target object TO stopped in the imaging range.

[3-2 Modification Example 2]

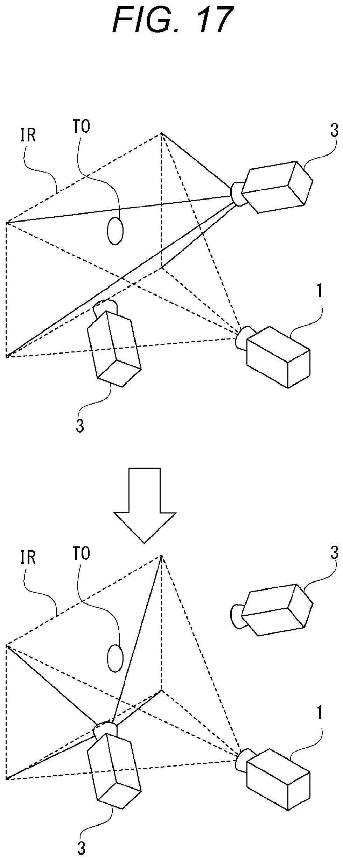

Fig. 17 illustrates illumination control in modification example 2. In modification example 2, a plurality of illumination units 3 is provided. Here, a case where two illumination units 3 are provided will be described. The two illumination unit 3 are arranged at different positions.

For example, as illustrated in the upper part of Fig. 17, when the target object TO moves in the imaging range while light is emitted from one of the illumination units 3, the target object TO appears in an image captured by the vision sensor 14a caused by the imaging control unit 21.

Meanwhile, when the target object TO stops in the imaging range, the address event does not occur in the vision sensor 14a, and thus the target object TO does not appear in the image captured by the vision sensor 14a.

In a case where the target object TO may not be detected in the imaging range, as illustrated in the lower part of Fig. 17, the imaging control unit 21 stops the emission of light from one of the illumination units 3 and starts the emission of light from the other illumination units 3. When the emission of light from the other illumination unit 3 is started, luminance changes for the target object TO and thus the vision sensor 14a captures an image of the target object TO.

As described above, in modification example 2, similarly to modification example 1, the target object TO may be measured continuously.

Note that in a case where a plurality of illumination units 3 is not provided, the target object TO may be measured by moving the illumination unit 3 even when the target object TO is stopped, as in the case where a plurality of illumination units 3 is switched to emit light.

<4. Summary of Embodiments>

As described above, the measuring device 1 of the embodiments includes the imaging control unit 21 configured to cause the imaging unit 14 to capture an image of a predetermined imaging range in water, and the measurement unit (distance/speed measurement unit 23) configured to measure information regarding the position of the target object in then imaging direction on the basis of the image captured by the imaging unit 14.

Thus, the measuring device 1 may measure information regarding the position of the target object in the imaging direction without having a complicated configuration.

For example, it is also contemplated that two imaging units 14 provided in parallel are used as a stereo camera to measure information regarding the position of the target object in the imaging direction. However, in this method, the device becomes complicated and calibration of the two imaging units 14 becomes difficult.

In contrast, the measuring device 1 may efficiently measure information regarding the position of the target object.

In the measuring device 1 according to the present technology described above, it is contemplated that the imaging unit 14 includes a vision sensor 14a configured to acquire pixel data asynchronously in accordance with the amount of light incident on each of a plurality of pixels arranged two-dimensionally.

This makes it possible to read only the pixel data of the pixel in which the event occurs and measure the target object on the basis of the pixel data.

Therefore, the measuring device 1 may achieve high-speed imaging, power consumption reduction, and lower calculation cost of image processing by automatic separation from the background.

In the measuring device 1 according to the present technology described above, it is contemplated that the illumination unit 3 is provided that irradiates the imaging range with light of a predetermined wavelength and the imaging unit 14 captures an image of the imaging range irradiated with light of the predetermined wavelength by the illumination unit 3.

This makes it possible to capture only an image of reflected light or excitation light from the target object at a water depth where sunlight does not reach.

Therefore, the measuring device 1 may measure the target object efficiently.

In the measuring device 1 according to the present technology described above, it is contemplated that the illumination unit 3 may switch and emit light of different wavelengths and the imaging unit 14 captures an image of the imaging range irradiated with light of different wavelengths, respectively.

This makes it possible to capture an image of reflected light or excitation light that is different depending on the wavelength for each type of the target object.

Therefore, the measuring device 1 may acquire a characteristic image for each target object.

In the measuring device 1 according to the present technology described above, it is contemplated that the measurement unit measures the distance to the target object in the imaging direction.

This makes it possible to measure the distance to the target object in the imaging direction with a simple configuration without using a complicated configuration such as a stereo camera.

In the measuring device 1 according to the present technology described above, it is contemplated that the measurement unit measures the speed of the target object in the imaging direction.

This makes it possible to measure the speed of the target object in the imaging direction speed with a simple configuration without using a complicated configuration such as a stereo camera.

In the measuring device 1 according to the present technology described above, it is contemplated that the identification unit (class identification unit 22) is provided that identifies the type of the target object on the basis of the image captured by the imaging unit 14, and the measurement unit measures information regarding the position of the target object on the basis of the type of the target object identified by the identification unit.

This makes it possible to measure information regarding the position of the target object by a method (model) adapted for each type of the target object.

Therefore, the measuring device 1 may accurately measure information regarding the position of the target object in the imaging direction.

In the measuring device 1 according to the present technology described above, it is contemplated that the measurement unit measures information regarding the position of the target object on the basis of the statistical information for each type of the target object.

This makes it possible to measure information regarding the position of the target object in the imaging direction by a simple method.

In the measuring device 1 according to the present technology described above, it is contemplated that the measurement unit derives the information regarding the position of the target object on the basis of the learning result of information regarding the position previously learned for each type of the target object.

This makes it possible to accurately measure the information regarding the position of the target object in the imaging direction.

In the measuring device 1 according to the present technology described above, it is contemplated that the measurement unit derives the information regarding the position of the target object on the basis of the learning result of the information regarding the position previously learned regardless of the type of the target object.

This makes it possible to reduce data capacity and decrease calculation time.

In the measuring device 1 according to the present technology described above, it is contemplated that the imaging control unit 21 temporarily stops the emission of light from the illumination unit 3 in a case where the target object may not be detected in the imaging range.

This makes it possible to continuously measure the target object stopped in the imaging range.

In the measuring device 1 according to the present technology described above, it is contemplated that the imaging control unit 21 changes the wavelength of light emitted from the illumination unit 3 in a case where the target object may not be detected in the imaging range.

This makes it possible to continuously measure the target object stopped in the imaging range.

In the measuring device 1 according to the present technology described above, it is contemplated that the imaging control unit 21 moves the illumination unit 3 in a case where the target object may not be detected in the imaging range.

This makes it possible to continuously measure the target object stopped in the imaging range.

In the measuring device 1 according to the present technology described above, it is contemplated that a plurality of illumination units 3 is provided, and the imaging control unit 21 causes a different illumination unit 3 to emit light in a case where the target object may not be detected in the imaging range.

This makes it possible to continuously measure the target object stopped in the imaging range.

In the measurement method according to the present technology described above, an image of a predetermined imaging range in water is captured by the imaging unit, and information regarding the position of the target object in the imaging direction is measured on the basis of the captured image.

In the program according to the present technology described above, the information processing device is caused to execute processing of causing the imaging unit to capture an image of a predetermined imaging range in water and of measuring information regarding the position of the target object in the imaging direction on the basis of the captured image.

Such a program may be recorded in advance in an HDD as a storage medium built in a device such as a computer device, a ROM in a microcomputer having a CPU, or the like.

Alternatively, the program may be temporarily or permanently stored (recorded) in a removable recording medium such as a flexible disk, a compact disc read only memory (CD-ROM), a magneto optical (MO) disk, a digital versatile disc (DVD), a Blu-ray disc (registered trademark), a magnetic disk, a semiconductor memory, a memory card, or the like. Such a removable recording medium may be provided as what is called package software.

Furthermore, such a program may be installed from the removable recording medium into a personal computer or the like, or may be downloaded from a download site via a network such as a local area network (LAN) or the Internet.

Furthermore, such a program is suitable for providing the information processing device of the embodiments in a wide range. For example, by downloading the program to a mobile terminal device such as a smartphone, a tablet, or the like, a mobile phone, a personal computer, game equipment, video equipment, a personal digital assistant (PDA), or the like, such a device may be caused to function as the information processing device of the present disclosure.

Note that the effects described herein are merely examples and not limiting, and there may be other effects.

<5. Present Technology>

The present technology may also be configured as follows.

(1) A measuring device including:

an imaging control unit configured to cause an imaging unit to capture an image of a predetermined imaging range in water; and
a measurement unit configured to measure information regarding a position of a target object in an imaging direction on the basis of the image captured by the imaging unit.

(2) The measuring device according to (1),
in which the imaging unit includes a vision sensor configured to acquire pixel data asynchronously in accordance with an amount of light incident on each of a plurality of pixels arranged two-dimensionally.

(3) The measuring device according to (1) or (2), further including

an illumination unit configured to irradiate the imaging range with light of a predetermined wavelength, in which
the imaging unit captures an image of the imaging range irradiated with light of a predetermined wavelength by the illumination unit.

(4) The measuring device according to (3), in which

the illumination unit may switch and emit light of different wavelengths, and
the imaging unit captures an image of the imaging range irradiated with light of different wavelengths, respectively.

(5) The measuring device according to any one of (1) to (4), in which
the measurement unit measures a distance to the target object in the imaging direction.

(6) The measuring device according to any one of (1) to (5), in which
the measurement unit measures a speed of the target object in the imaging the imaging direction.

(7) The measuring device according to any one of (1) to (6), further including

an identification unit configured to identify the type of the target object on the basis of the image captured by the imaging unit, in which
the measurement unit measures information regarding a position of the target object on the basis of the type of the target object identified by the identification unit.

(8) The measuring device according to (7), in which the measurement unit measures information regarding a position of the target object on the basis of statistical information for each type of the target object.

(9) The measuring device according to any one of (1) to (6), in which
the measurement unit measures information regarding a position of the target object on the basis of a learning result of information regarding a position previously learned for each type of the target object.

(10) The measuring device according to any one of (1) to (6), in which
the measurement unit measures information regarding a position of the target object on the basis of a learning result of information regarding a position previously learned regardless of the type of the target object.

(11) The measuring device according to (3) or (4), in which
the imaging control unit temporarily stops emission of light from the illumination unit in a case where the target object may not be detected within the imaging range.

(12) The measuring device according to (3), in which the imaging control unit changes a wavelength of light emitted from the illumination unit in a case where the target object may not be detected within the imaging range.

(13) The measuring device according to (3) or (4), in which
the imaging control unit moves the illumination unit in a case where the target object may not be detected within the imaging range.

(14) The measuring device according to (3) or (4), in which

the illumination units are provided in a plurality, and
the imaging control unit causes a different illumination unit to emit light in a case where the target object may not be detected within the imaging range.

(15) A measurement method including:

capturing, by an imaging unit, an image of a predetermined imaging range in water; and
measuring information regarding a position of a target object in an imaging direction on the basis of the captured image.

(16) A program configured to cause a measuring device to execute processing of

causing an imaging unit to capture an image of a predetermined imaging range in water, and measuring information regarding a position of a target object in an imaging direction on the basis of the captured image.

REFERENCE SIGNS LIST

| | |
|---|---|
| 1 | Measuring Device |
| 3 | Illumination Unit |
| 10 | Control Unit |
| 14 | Imaging Unit |
| 14a | Vision Sensor |
| 14b | Imaging Sensor |
| 21 | Imaging Control Unit |
| 22 | Class Identification Unit |
| 23 | Distance/Speed Measurement Unit |

**Claims**

1. A measuring device comprising:

 an imaging control unit configured to cause an imaging unit to capture an image of a predetermined imaging range in water; and
 a measurement unit configured to measure information regarding a position of a target object in an imaging direction on a basis of the image captured by the imaging unit.

2. The measuring device according to claim 1, wherein the imaging unit comprises a vision sensor configured to acquire pixel data asynchronously in accordance with an amount of light incident on each of a plurality of pixels arranged two-dimensionally.

3. The measuring device according to claim 1, further comprising

 an illumination unit configured to irradiate the imaging range with light of a predetermined wavelength, wherein
 the imaging unit captures an image of the imaging range irradiated with light of a predetermined wavelength by the illumination unit.

4. The measuring device according to claim 3, wherein

 the illumination unit may switch and emit light of different wavelengths, and
 the imaging unit captures an image of the imaging range irradiated with light of different wavelengths, respectively.

5. The measuring device according to claim 1, wherein the measurement unit measures a distance to the target object in the imaging direction.

6. The measuring device according to claim 1, wherein the measurement unit measures a speed of the target object in the imaging direction.

7. The measuring device according to claim 1, further comprising

 an identification unit configured to identify the type of the target object on a basis of the image captured by the imaging unit, wherein
 the measurement unit measures information regarding a position of the target object on a basis of the type of the target object identified by the identification unit.

8. The measuring device according to claim 7, wherein the measurement unit measures information regarding a position of the target object on a basis of statistical information for each type of the target object.

9. The measuring device according to claim 1, wherein the measurement unit measures information regarding a position of the target object on a basis of a learning result of information regarding a position previously learned for each type of the target object.

10. The measuring device according to claim 1, wherein the measurement unit measures information regarding a position of the target object on a basis of a learning result of information regarding a position previously learned regardless of the type of the target object.

11. The measuring device according to claim 3, wherein the imaging control unit temporarily stops emission of light from the illumination unit in a case where the target object may not be detected within the imaging range.

12. The measuring device according to claim 4, wherein the imaging control unit changes a wavelength of light emitted from the illumination unit in a case where the target object may not be detected within the imaging range.

13. The measuring device according to claim 3, wherein the imaging control unit moves the illumination unit in a case where the target object may not be detected within the imaging range.

14. The measuring device according to claim 3, wherein

 the illumination units are provided in a plurality, and
 the imaging control unit causes a different illumination unit to emit light in a case where the target object may not be detected within the imaging range.

15. A measurement method comprising:

capturing, by an imaging unit, an image of a predetermined imaging range in water; and measuring information regarding a position of a target object in an imaging direction on a basis of the captured image.

16. A program configured to cause a measuring device to execute processing of

causing an imaging unit to capture an image of a predetermined imaging range in water, and measuring information regarding a position of a target object in an imaging direction on a basis of the captured image.

# FIG. 1

# FIG. 2

*FIG. 3*

*FIG. 4*

| MEASUREMENT SETTING | MEASUREMENT START CONDITION | CONDITION TO START MEASUREMENT TIME OR MEASUREMENT START COMMAND RECEPTION |
|---|---|---|
| | OPERATION TIME SHEET | OPERATION SETTING OF ILLUMINATION UNIT |
| | IDENTIFICATION PROGRAM | RULE-BASED OR MACHINE LEARNING |
| | DISTANCE/SPEED MEASUREMENT PROGRAM | RULE-BASED OR MACHINE LEARNING |
| | MEASUREMENT END CONDITION | CONDITION TO END MEASUREMENT TIME OR MEASUREMENT END COMMAND RECEPTION |

*FIG. 5*

| TIME | 0 | 1 | 2 | 3 | 4 | 5 | . . . . . | | | | . . . . . |
|---|---|---|---|---|---|---|---|---|---|---|---|
| WAVELENGTH | OFF | 400 nm | OFF | 410 nm | OFF | 420 nm | . . . | 690 nm | OFF | 700 nm | |

# FIG. 6

```
                    ┌─────────────────────────┐
                    │          START          │
                    └─────────────────────────┘
                                 │
            ┌────────────────────┤
            │                    ▼
            │   ┌──────────────────────────────────────────┐
            │   │ READ EXTERNAL ENVIRONMENT INFORMATION     │  S1
            │   └──────────────────────────────────────────┘
            │                    │
            │                    ▼
       No   │   ┌──────────────────────────────────────────┐
       ◄────┤   │ MEASUREMENT START CONDITION IS SATISFIED? │  S2
            │   └──────────────────────────────────────────┘
            │                    │ Yes
            │                    ▼
            │   ┌──────────────────────────────────────────┐
            │   │ OPERATE ACCORDING TO OPERATION TIME SHEET │  S3
            │   └──────────────────────────────────────────┘
            │                    │
            │                    ▼
            │   ┌──────────────────────────────────────────┐
            │   │ CLASS IDENTIFICATION PROCESSING           │  S4
            │   └──────────────────────────────────────────┘
            │                    │
            │                    ▼
            │   ┌──────────────────────────────────────────┐
            │   │ DISTANCE/SPEED MEASUREMENT PROCESSING     │  S5
            │   └──────────────────────────────────────────┘
            │                    │
            │                    ▼
       No   │   ┌──────────────────────────────────────────┐
       ◄────┘   │ MEASUREMENT END CONDITION IS SATISFIED?   │  S6
                └──────────────────────────────────────────┘
                                 │ Yes
                                 ▼
                    ┌─────────────────────────┐
                    │           END           │
                    └─────────────────────────┘
```

FIG. 7

# FIG. 8

# FIG. 9

Max Pooling    Max Pooling    Max Pooling

Conv1    Conv2    Conv3  Conv4    Conv5    FC  FC

Distance 1mm

Distance 10mm

Distance 50mm

Distance 100mm

Distance 200mm

Classification

FIG. 10

EP 4 350 284 A1

# FIG. 11

| MEASUREMENT SETTING | MEASUREMENT START CONDITION | CONDITION TO START MEASUREMENT<br>TIME OR MEASUREMENT START COMMAND RECEPTION |
| | OPERATION TIME SHEET | OPERATION SETTING OF ILLUMINATION UNIT |
| | DISTANCE/SPEED DETERMINATION PROGRAM | RULE-BASED OR MACHINE LEARNING |
| | MEASUREMENT END CONDITION | CONDITION TO END MEASUREMENT<br>TIME OR MEASUREMENT END COMMAND RECEPTION |

EP 4 350 284 A1

# FIG. 12

```
                    ┌─────────────────────────────┐
                    │            START            │
                    └─────────────────────────────┘
                                  │
    ┌────────────────────────────▶│
    │     ┌──────────────────────────────────────────┐
    │     │  READ EXTERNAL ENVIRONMENT INFORMATION    │  S1
    │     └──────────────────────────────────────────┘
    │                             │
    │   No   ╱─────────────────────────────────────╲
    ├────────   MEASUREMENT START CONDITION IS SATISFIED?   S2
    │        ╲─────────────────────────────────────╱
    │                             │ Yes
    │ ┌───────────────────────────▶│
    │ │   ┌──────────────────────────────────────────┐
    │ │   │ OPERATE ACCORDING TO OPERATION TIME SHEET │  S3
    │ │   └──────────────────────────────────────────┘
    │ │                           │
    │ │   ┌──────────────────────────────────────────┐
    │ │   │ DISTANCE/SPEED MEASUREMENT PROCESSING     │  S11
    │ │   └──────────────────────────────────────────┘
    │ │                           │
    │ │ No ╱─────────────────────────────────────╲
    │ └────  MEASUREMENT END CONDITION IS SATISFIED?    S6
    │      ╲─────────────────────────────────────╱
    │                             │ Yes
    │                    ┌─────────────────────────────┐
    │                    │            END              │
    │                    └─────────────────────────────┘
```

26

## FIG. 13

200

ILLUMINATION UNIT 3

ILLUMINATION UNIT 3

MAIN BODY PORTION 2

## FIG. 14

300

ILLUMINATION UNIT 3

MAIN BODY PORTION 2

MAIN BODY PORTION 2

# FIG. 15

# FIG. 16

(a)

(b)

(c)

(d)

(e)

# FIG. 17

## INTERNATIONAL SEARCH REPORT

| International application No. |
|---|
| **PCT/JP2022/021150** |

**A. CLASSIFICATION OF SUBJECT MATTER**

*G01C 3/06*(2006.01)i
FI:  G01C3/06 120S

According to International Patent Classification (IPC) or to both national classification and IPC

**B. FIELDS SEARCHED**

Minimum documentation searched (classification system followed by classification symbols)

G01C3/06; G01B11/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2007-189542 A (FUJIFILM CORP) 26 July 2007 (2007-07-26) paragraphs [0001]-[0046], fig. 1-9 | 1, 3-5, 11-16 |
| Y | | 2-4, 7-14 |
| X | WO 2021/038753 A1 (UMITRON PTE. LTD.) 04 March 2021 (2021-03-04) paragraphs [0001]-[0246], fig. 1-20 | 1, 5-6, 15-16 |
| Y | | 2-4, 7-14 |
| Y | WO 2019/150786 A1 (SONY SEMICONDUCTOR SOLUTIONS CORP) 08 August 2019 (2019-08-08) paragraphs [0002]-[0004] | 2 |
| Y | WO 2014/171052 A1 (KONICA MINOLTA, INC.) 23 October 2014 (2014-10-23) paragraphs [0018]-[0032], fig. 2-6 | 7-8 |
| Y | JP 2019-8460 A (TOSHIBA CORP) 17 January 2019 (2019-01-17) paragraphs [0008]-[0053], fig. 1-12 | 9-10 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 July 2022** | **26 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/021150**

| Patent document cited in search report | | | Publication date (day/month/year) | Patent family member(s) | | | Publication date (day/month/year) |
|---|---|---|---|---|---|---|---|
| JP | 2007-189542 | A | 26 July 2007 | (Family: none) | | | |
| WO | 2021/038753 | A1 | 04 March 2021 | JP | 2021-164444 | A | |
| WO | 2019/150786 | A1 | 08 August 2019 | US 2020/0351455 A1 paragraphs [0002]-[0003] CN 111656770 A KR 10-2020-0112854 A | | | |
| WO | 2014/171052 | A1 | 23 October 2014 | (Family: none) | | | |
| JP | 2019-8460 | A | 17 January 2019 | US 2018/0373942 A1 paragraphs [0016]-[0063], fig. 1-12 EP 3418943 A1 | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019165687 A